# FASCICULE DE BREVET EUROPEEN

(11) **EP 0 612 932 B1**
(45) Date de publication et mention de la délivrance du brevet: **23.10.1996**
(21) Numéro de dépôt: 94400344.1
(22) Date de dépôt: 16.02.1994
(51) Int. Cl.: F16F 7/14

(54) **Dispositif antivibratoire/antichocs et procédé de fabrication d'un tel dispositif**
Vibrationsisolierende Einheit und dessen Herstellungsverfahren
Arrangement for vibration isolation and its manufacturing process

(30) Priorité: 22.02.1993 FR 9301995
(43) Date de publication de la demande: 31.08.1994
(73) Titulaire: SOCITEC SOCIETE POUR LE COMMERCE INTERNATIONAL ET LES ECHANGES TECHNIQUES, F-78500 Sartrouville (FR)
(72) Inventeur: Hay, Jean-Yves, F-92700 Colombes (FR)
(74) Mandataire: Rinuy, Santarelli

(56) Documents cités:
- EP-A- 0 499 518
- DE-U- 7 306 006
- FR-A- 2 033 193
- FR-A- 2 189 660
- FR-A- 2 601 739

## Description

La présente invention a trait, d'une manière générale, aux dispositifs antivibratoires/antichocs. Plus particulièrement, elle concerne un dispositif antivibratoire/antichocs du genre comportant un élément porteur et un élément porté liés par du câble, les éléments porteur et porté comportant chacun au moins deux points d'ancrage pour le câble disposés au voisinage des sommets d'un polygône à n sommets, le câble étant alternativement ancré sur un point de l'élément porteur et sur un point de l'élément porté et étant orienté sur les points d'ancrage d'un premier au moins desdits éléments dans une direction globalement transversale à la direction radiale. Elle concerne aussi un procédé de fabrication d'un tel dispositif.

De tels dispositifs ont fait l'objet d'une demande de brevet français (FR-A-2.601.739). La figure 1 illustre un mode de réalisation d'un tel dispositif antivibratoire/antichocs, dans lequel les polygones sont réduits à leur plus simple expression puisqu'ils sont constitués l'un et l'autre par un segment de droite, le câble étant alternativement ancré sur un point d'ancrage de l'élément porteur et un point d'ancrage de l'élément porté, le câble étant orienté sur les points d'ancrage considérés, dans une direction globalement transversale à la direction radiale (la direction du segment de droite reliant les deux points d'ancrage sur l'élément considéré.

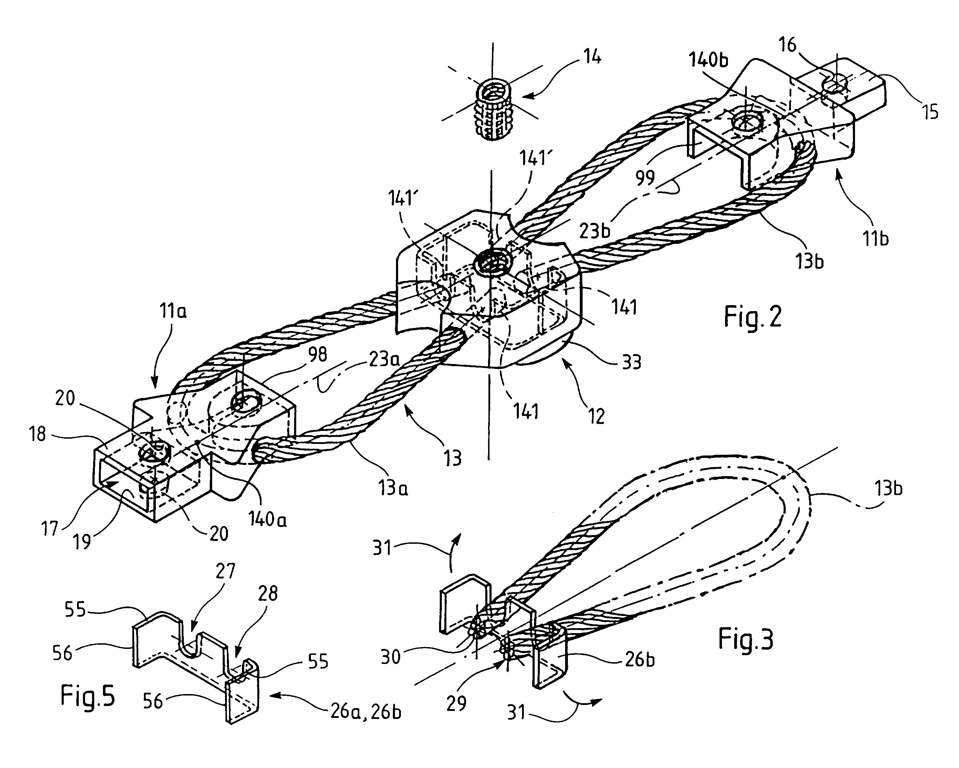

Les figures 2 à 5 illustrent un autre mode de réalisation, dans lequel les polygones, constitués par les éléments porteur et porté sont en l'espèce des carrés, le câble étant ancré sur chacun de ces éléments, selon une direction globalement transversale à la direction radiale, c'est-à-dire au segment de droite joignant le point d'ancrage au centre du carré considéré. La présente invention s'intéresse à un perfectionnement du procédé de fabrication de ces éléments par ailleurs décrits dans ce document.

Tout d'abord, la demanderesse a pu constater que des dispositifs antivibratoires/antichocs tels que ceux décrits dans la demande de brevet antérieure FR-A-2601739, présentent un volume important, ce qui n'est pas favorable sur le plan du stockage ou du transport. Elle a donc cherché un moyen permettant de stocker de tels amortisseurs ou de les transporter dans des conditions où le dispositif antivibratoire/ antichocs n'occupe pas le volume qu'il occupe lorsqu'il est monté.

La présente invention résoud ce problème puisqu'elle propose un dispositif antivibratoire/antichocs du genre rappelé ci-dessus, caractérisé en ce que l'un des éléments porteur ou porté est constitué de façon modulaire et comporte d'une part, des modules d'ancrage individuel et, d'autre part, des moyens d'assemblage de ceux-ci. Par ailleurs, le procédé conforme à l'invention est caractérisé en ce que :
- dans une première phase dite "d'ancrage", on ancre le câble, d'une part, dans chacun desdits modules d'ancrage de l'élément modulaire et, d'autre part, dans l'autre élément, et
- dans une seconde phase, on assemble l'élément modulaire.

Grâce à ces dispositions, la présente invention résoud le problème du stockage et du transport. En effet, le fait que l'un des éléments porteur ou porté est constitué d'une pluralité de modules d'ancrage individuels et de moyens d'assemblage permet, à l'issue de la première phase de fabrication, d'obtenir un dispositif antivibratoire/antichocs, partiellement monté, mais susceptible de s'inscrire dans un plan et par conséquent d'être stocké à plat. A l'issue du stockage, ou du transport dans les mêmes conditions, la deuxième phase de fabrication au cours de laquelle on assemble l'élément modulaire peut être exécutée. Cette phase peut être rendue particulièrement aisée dans l'hypothèse où les moyens d'assemblage des modules d'ancrage sont constitués par des moyens d'encliquetage ou d'enfichage.

Dans un mode préféré de réalisation, le câble n'est ancré, dans une direction globalement transversale à la direction radiale, que sur un seul des éléments porteur ou porté. Dans ce mode préféré de réalisation, c'est l'élément dans lequel le câble est ancré selon une direction transversale à la direction radiale qui est choisi comme élément modulaire. En outre, le câble est subdivisé en autant de brins de câble que de modules d'ancrage, chaque brin de câble étant associé à l'un de ces modules.

Grâce à ces dispositions, la fabrication, notamment la phase d'assemblage du dispositif, sont facilitées. En effet, les boucles porteuses des éléments modulaires sont en fin de phase d'ancrage, agencées en étoile autour de l'élément non modulaire, tandis que chaque brin de câble est ancré, sur les modules d'ancrage, dans une direction globalement transversale, par rapport à la direction radiale. Lorsque, au cours de la phase d'assemblage, l'élément modulaire est assemblé, l'effort devant être exercé sur les brins, au niveau des modules d'ancrage, est un effort de torsion du câble combiné à un effort de flexion, cet ensemble d'efforts étant globalement moins important que celui qui devrait être exercé si le câble n'était pas ancré selon une direction transversale par rapport à la direction radiale, auquel cas l'effort devrait être un effort de flexion particulièrement important.

Toutefois, dans d'autres modes de réalisation, compte tenu des impératifs autres que celui qui vient d'être énoncé, on pourra choisir comme élément modulaire, celui dans lequel le câble n'est pas ancré selon une direction globalement transversale à la direction radiale.

Dans le mode de réalisation préféré, et selon une caractéristique très avantageuse de la présente invention, l'un au moins desdits éléments porteur et porté est au moins partiellement fabriqué par moulage, ce moulage intervenant au cours de la phase d'ancrage. De préférence, l'ensemble des éléments porteur ou porté est, au moins partiellement, fabriqué par moulage, l'opération de moulage étant faite en une seule fois.

L'ensemble de ces dispositions est particulièrement avantageux puisqu'il permet de diminuer le prix de revient du dispositif antivibratoire/antichocs de façon importante, par rapport à l'état de la technique constitué notamment celui exposé dans la demande de brevet susmentionnée, dans lequel, les éléments porteur et porté sont fabriqués par assemblage de pièces métalliques, les ancrages des câbles étant constitués par le pincement du câble entre deux pièces métalliques distinctes. Dans cet état de la technique, chaque point d'ancrage du câble donne lieu à plusieurs opérations de fabrication, certaines d'entre elles devant être faites séquentiellement. Il s'ensuit d'une part, que le temps de montage est particulièrement élévé, tandis que, d'autre part, il faut fabriquer diverses pièces de façon isolée.

Grâce aux caractéristiques de l'invention rappelées plus haut, il est possible de combiner, au moins partiellement, l'opération d'ancrage et l'opération de fabrication des pièces constituant les éléments porteur et porté. D'ailleurs, dans le mode préféré de réalisation, l'ensemble des pièces et l'ancrage du câble dans ces dernières est réalisé au cours d'une seule opération de moulage, précédée par le positionnement des brins de câble à l'intérieur du moule. L'homme de l'art appréciera l'économie de temps et de moyens mis en oeuvre pour la fabrication d'un dispositif antivibratoire/antichocs.

Dans ce mode de réalisation, et lorsque cela est nécessaire, il peut être prévu d'utiliser un étrier de montage dans lequel on vient insérer les deux extrémités d'un brin de câble pour réaliser une boucle.

Cette disposition est particulièrement avantageuse en ce qu'elle permet :
- de faciliter l'opération de mise en place des boucles dans le moule,
- de renforcer l'ancrage des extrémités de brin de câble. En effet, lors de l'opération de moulage, surtout lorsque cette dernière a lieu par injection, le plastique en fusion pénètre entre les divers fils constituant les torons du brin de câble, au niveau des extrémités du brin, et entraîne de ce fait une légère augmentation du volume au niveau de ces extrémités, ce qui rend ensuite le glissement des extrémités du brin de câble à l'intérieur des encoches de l'étrier impossible, en raison du coincement lié à l'augmentation de volume susmentionnée.

De ce fait, on augmente de façon très importante la résistance de l'ancrage à l'arrachement. C'est pourquoi, dans le dispositif antivibratoire/antichocs selon la présente invention, il est possible d'éviter d'ancrer les extrémités du brin de câble selon une direction transversale à la direction radiale, ce qui n'était pas le cas dans l'état de la technique susmentionné, dans lequel des efforts avaient souvent lieu dans une direction radiale, ce qui augmentait le risque d'arrachement du câble dans l'hypothèse où celui-ci aurait été ancré dans une direction parallèle à la direction radiale.

Selon une autre caractéristique de l'invention mise en oeuvre dans un mode préféré de réalisation du procédé conforme à l'invention, chaque passage adapté à recevoir le câble et à lui permettre la sortie d'une zone de moulage, sont associés à un joint d'étanchéité.

On évite ainsi, lors de l'injection, que du plastique en fusion s'échappe de la zone de moulage, en suivant les torons du câble.

Dans un mode de réalisation préféré, le joint d'étanchéité est constitué par un bloc d'élastomère adapté à se conformer, partiellement au moins, autour du câble.

Dans un autre mode préféré, le joint d'étanchéité est constitué par une portée cylindrique en aluminium directement moulée sur le câble.

Les caractéristiques et avantages de la présente invention ressortiront d'ailleurs de la description qui va suivre en référence aux dessins annexés sur lesquels :
- la figure 1 est une vue en perspective d'un mode préféré de réalisation d'un dispositif conforme à l'invention,
- la figure 2 est une vue de ce même dispositif, à l'issue de la phase d'ancrage des brins de câble,
- la figure 3 est une vue schématique d'une boucle formée avec un brin de câble et un étrier, conformément à un mode de réalisation préféré de l'invention,
- la figure 4 est une vue en perspective d'une pièce du dispositif illustré en figure 1,
- la figure 5 est une vue en perspective de l'étrier illustré en figure 3,
- les figures 6A et 6B sont des vues en coupe longitudinale selon la ligne VI-VI des figures 9 et 10, et représentent le moule utilisé dans un mode préféré de réalisation du procédé de fabrication conforme à l'invention,
- la figure 7 est une vue agrandie de l'encart VII des figures 6A et 6B,
- la figure 8 est une vue en coupe transversale selon la ligne VIII-VIII de la figure 7, mais illustre l'ensemble lorsque le moule est fermé,
- la figure 9 est une vue du dessus selon la ligne et les flèches IX des figures 6 et montre la partie inférieure du moule illustré sur la figure 6B,
- la figure 10 est une vue du dessous selon la ligne et les flèches X des figures 6 et montre la partie supérieure du moule illustré sur la figure 6A,
- la figure 11 est une vue agrandie de l'encart XI de la figure 10,
- la figure 12 est une vue selon la ligne de coupe XII de la figure 11,
- la figure 13 est une vue en coupe partielle selon la ligne XIII de la figure 12,
- la figure 14 est une vue correspondant à la figure 12, mais illustre l'ensemble lorsque le moule est fermé,
- la figure 15 est une vue correspondant à la figure 13, mais illustre l'ensemble lorsque le moule est fermé,
- la figure 16a est une vue en coupe selon la ligne de coupe XVI de la figure 11, et montre en outre en coupe partielle la partie correspondante de la partie de moule inférieure et supérieure, moule ouvert,
- la figure 16b correspond à la figure 16a et illustre l'ensemble lorsque le moule est fermé,
- la figure 17 illustre l'agencement d'un brin de câble destiné à former une boucle, selon un autre mode préféré de réalisation du dispositif selon la présente invention,
- la figure 18 est une vue correspondant à la figure 3 et illustre la boucle formée conformément à ce second mode de réalisation,
- la figure 19 est une vue d'une partie de moule inférieure destinée à réaliser le brin de câble illustré en figure 17,
- la figure 20 est une vue en coupe longitudinale selon la ligne XX-XX de la figure 19,
- la figure 21 est une vue correspondant à la figure 9 et illustre la partie de moule inférieure utilisée pour fabriquer le dispositif selon le second mode de réalisation,
- la figure 22 est une vue agrandie de l'encart XXII,
- la figure 23 est une vue partielle en coupe selon la ligne XXIII de la figure 22,
- la figure 24 est une vue correspondant à la figure 23 et illustre l'ensemble lorsque le moule est fermé,
- la figure 25 est une vue selon la ligne de coupe XXV de la figure 22,
- la figure 26 est une vue correspondant à la figure 25 et illustre l'ensemble lorsque le moule est fermé, et
- la figure 27 est une vue en coupe partielle selon la ligne XXVII de la figure 21.

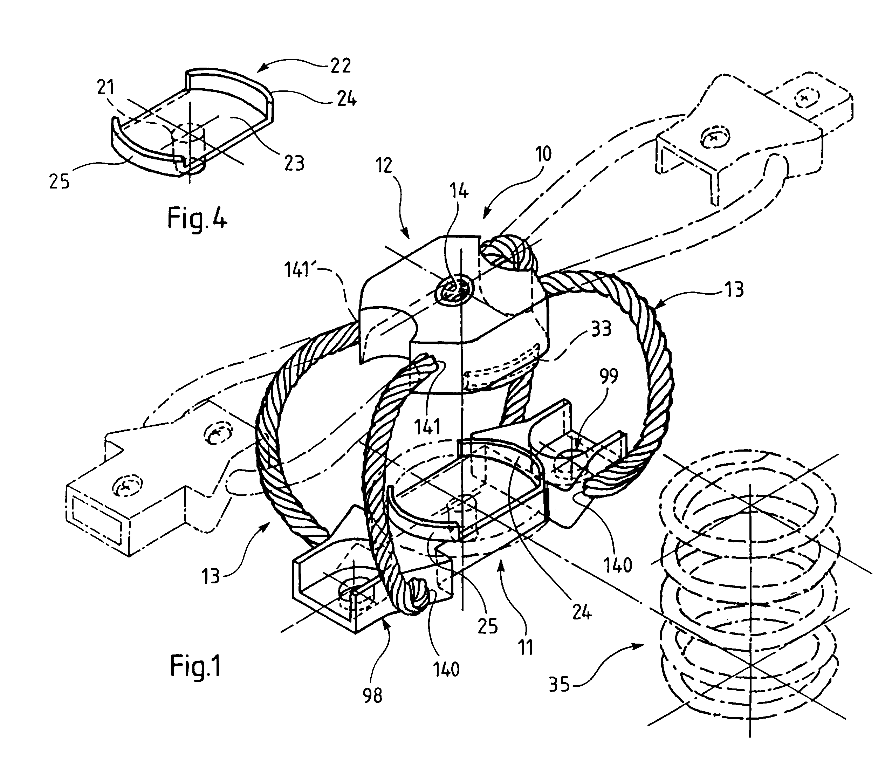

On va d'abord décrire à l'appui des figures 1 à 5, un premier mode de réalisation d'un dispositif antivibratoire/antichocs conforme à l'invention.

Selon le mode de réalisation choisi et représenté aux figures 1 et 2, un dispositif antivibratoire/antichocs 10 comporte un élément porteur 11 et un élément porté 12 liés par du câble 13 formant moyen amortisseur. Le dispositif est ici destiné à porter un mécanisme générant des vibrations, ce mécanisme étant fixé sur l'élément porté 12 par une vis adaptée à coopérer avec un insert 14 comportant essentiellement un alésage taraudé et solidaire de l'élément porté 12.

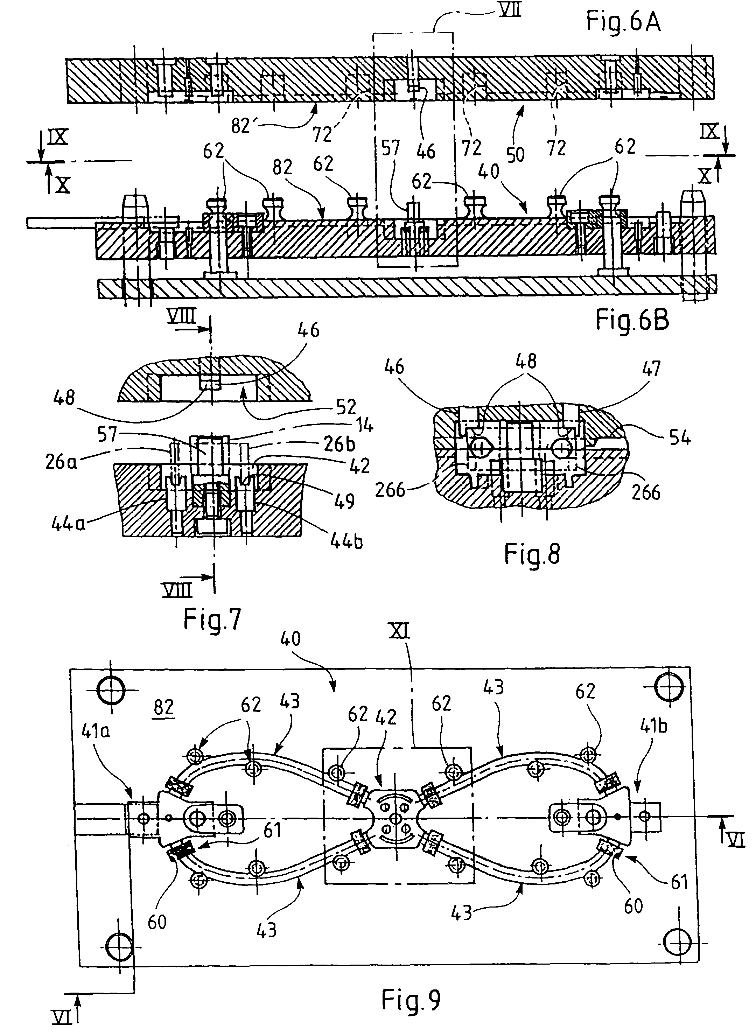

La figure 2 illustre le dispositif antivibratoire/antichocs en position non assemblée. On observe qu'ici l'élément porteur 11 est constitué de façon modulaire et qu'il comporte deux modules individuels d'ancrage 11a et 11b. L'élément modulaire comporte en outre des moyens permettant l'assemblage des modules d'ancrage 11a et 11b, ces moyens consistant ici en une languette parallélépipédique 15 portée par l'élément modulaire 11b, cette languette comportant elle-même un trou central 16, et en un logement 17 de forme complémentaire à la languette 15 portée par l'élément modulaire 11a ; un trou central 20 traverse de part en part les parois horizontales 18 et 19 que comporte le logement 17, tandis que cette languette est munie d'un trou correspondant 16. On observe que ces moyens d'assemblage consistent en réalité ici en un dispositif d'enfichage (de la languette 15 dans le logement 17) et un dispositif à clavette. En effet, les trous 16 de la fiche mâle 15 et 20 de la fiche femelle 17, sont alignés, lorsque ces fiches sont assemblées, et permettent à une clavette 21 (figure 4) de verrouiller l'ensemble. La clavette 21 est intégrée dans une pièce 22 comportant en outre un plateau 23 et deux portées latérales en forme d'arc de circonférence 24 et 25 (figures 1 et 4).

Dans chacun des modules d'ancrage 11a et 11b, le câble 13 est ancré de telle sorte qu'il est orienté, sur le point d'ancrage, selon une direction globalement transversale à la direction radiale (schématisée en l'espèce par les axes 23a et 23b). En effet, dans la zone 140 d'ancrage du câble 13 dans les modules 11a et 11b, le câble forme une courbe qui, au point de son intersection, 140a, respectivement 140b, avec les axes 23a, respectivement 23b, est tangente à une direction elle-même perpendiculaire aux dits axes 23a et 23b. L'ancrage est réalisé ici par le moulage, conformément au procédé qui va être décrit infra, des modules 11a et 11b directement sur le câble 13. On observera que le câble est tenu sur l'ensemble du tronçon en forme d'arc emprisonné dans le module 11a (ou 11b), de part et d'autre du point 140a (ou 140b).

L'élément porté 12 est, ici, partiellement réalisé en matière plastique moulée. Toutefois, dans ce mode de réalisation, le câble est subdivisé en deux brins 13a, 13b. Il est ancré tout d'abord dans, conformément à un aspect de l'invention, dans un dispositif de pré-ancrage, ici un étrier 26a, 26b associé à chacun des brins de câble 13a, 13b. Chaque étrier 26a, 26b est constitué par une pièce d'acier, présentant, globalement, une forme en fer à cheval. Dans la branche du fer rejoignant les deux branches latérales, l'étrier comporte deux encoches 27 et 28, présentant une largeur sensiblement inférieure au diamètre du câble 13, comme visible en figure 3. Le fond de chaque encoche est semi-circulaire.

Les extrémités des brins de câble 13a et 13b sont introduites dans les encoches 27, 28 de l'étrier 26a, 26b considéré, de telle sorte qu'une boucle est ainsi formée, comme illustré en figure 3, avec chacun des brins de câble 13a, 13b. Au niveau des encoches, le brin de câble est simplement maintenu dans l'étrier, en raison de la largeur des encoches légèrement inférieures au diamètre du câble. Dans d'autres modes de réalisation, un point de soudure peut être ajouté. En tout état de cause, le câble, qui est ici un câble d'acier de diamètre 8 mm, a une tendance naturelle à reprendre élastiquement sa forme d'origine, c'est-à-dire droite. Par conséquent, les extrémités 29, 30 des brins de câbles 13a, 13b exercent une force vers l'extérieur de l'étrier, dans la direction des flèches 31, ce qui même en l'absence d'un point de soudure, facilite le maintien de la boucle dans l'étrier. L'ensemble de la pièce 12, avec l'insert 14, est ensuite directement moulé autour des extrémités 29, 30 des brins de câbles 13a, 13b associées à leurs étriers respectifs 26a, 26b, selon le procédé qui va être décrit plus loin.

Lorsque, dans ce mode de réalisation, les pièces 11a, 11b et 12 ont été moulées directement sur le câble, réalisant ainsi totalement (sur les pièces 11a, 11b) ou partiellement (sur la pièce 12) l'ancrage du câble, on peut alors assembler les éléments modulaires 11a, 11b, comme illustré en figure 1, en procédant à l'enfichage de la languette 15 puis au clavetage, par emmanchage et collage de la pièce 22 portant la clavette 21 dans les trous 16 et 20.

On notera que dans le mode de réalisation choisi et représenté, l'ancrage du câble dans l'élément porté 12 se fait selon une direction qui est globalement parallèle à l'axe de symétrie du système, c'est-à-dire à la direction radiale schématisée sur la figure 2 par les axes 23a et 23b. Les brins de câble 13a, 13b sont ancrés dans l'élément porté 12 au niveau de leurs extrémités 29, 30, la longueur du tronçon de câble emprisonné dans la pièce 12a, au niveau des extrémités 29 et 30, constitue l'ancrage du câble dans l'élément porté 12. Les tronçons d'ancrage sont référencés 141, 141' sur les figures 1 et 2.

Compte tenu du pré-ancrage du brin de câble 13a, 13b dans un étrier 26a, 26b, et compte tenu du fait que, conformément au procédé qui va être décrit infra, la pièce 12 est moulée par injection, le plastique en fusion pénètre entre les divers fils et torons, au niveau des extrémités 29 et 30 du câble, ce qui entraîne une légère augmentation du volume de ces dernières : un coincement naturel des brins de câble 13a, 13b dans les étriers 26a, 26b se trouve dès lors réalisé. Par conséquent, même dans l'hypothèse où d'importants efforts dans la direction radiale sont exercés sur le brin de câble (comme en l'espèce ceux exercés lorsque les brins de câble, sont conformés pour prendre la forme illustrée en figure 1), l'ensemble résiste suffisamment à de tels efforts et il n'est pas besoin d'orienter le câble, au niveau de l'élément porté 12, selon une direction globalement transversale à la direction radiale.

En revanche, au niveau de l'élément porteur et des modules 11a, 11b, l'ancrage du câble 13 selon une direction globalement transversale à la direction radiale est particulièrement avantageux, en ce qu'il facilite l'opération de conformation des brins de câble 13a, 13b, lors de l'encliquetage des éléments 11a et 11b en effet, l'effort à exercer au niveau de ces éléments est essentiellement un effort faible de torsion du câble (toutefois avec un bras de levier, généré par la longueur des éléments modulaires), combinée avec un faible effort de flexion du câble, l'ensemble de ces efforts étant moins important que l'effort de flexion qui devrait être exercé si, sur les éléments modulaires 11a et 11b, le câble 13 était ancré dans une direction parallèle à la direction radiale.

Dans le mode de réalisation choisi et représenté, le corps de l'élément porté 12 présente également deux portées latérales 33 en forme d'arc, dont le rayon de courbure correspond à celui des portées 24 et 25 de la pièce 22. L'ensemble des portées 24, 25 et 33 permet le maintien latéral d'un ressort 35 que l'on peut, facultativement dans ce mode de réalisation, souhaiter interposer entre l'élément porteur 11 et l'élément porté 12. Ce ressort permet, dans certaines applications, d'augmenter la charge nominale du dispositif.

Les caractéristiques du dispositif antivibratoire/antichocs décrit ici sont les suivantes :
- câble de 8 mm de diamètre,
- brin de câble d'une longueur utile de : 280 mm
- charge nominale M_{c} du dispositif antivibratoire/antichocs représentée en l'absence du ressort 35 : 13 kg
- charge nominale M_{Rt} du ressort : 80 kg
- charge nominale du dispositif antivibratoire avec ressort 35 : 93 kg
- raideur dynamique K_{c} du dispositif antivibratoire/antichocs sans ressort : 12855 N/m, ce qui compte tenu de la masse nominale de 13 kg, donne une fréquence de résonance de : 5 Hz environ
   (calcul par la formule mentionnée en page 2 du document FR-A-2.601.739),
- raideur dynamique K_{Rt} du ressort : 79110 N/m; ce qui compte tenu de la charge nominale (M_{T} = M_{Rt} + M_{c}) du dispositif avec ressort (93 kg) donne une fréquence de résonance de 5 Hz environ. On notera que la fréquence de résonance du dispositif avec ou sans ressort est mathématiquement la même.

Toutefois, compte tenu de ce que le dispositif amortisseur antivibratoire/antichocs est non linéaire et qu'il est associé à un ressort qui est un système linéaire, la fréquence de résonance du dispositif avec ressort 35 est susceptible de varier quelque peu, selon l'excitation vibratoire, et ce pour une déflexion statique identique du dispositif avec et sans ressort.

On notera en outre que des pattes de fixation 98, 99 sont intégrées dans chacun des éléments modulaires 11a et 11b, de telle sorte que, lorsque l'ensemble du dispositif est assemblé, comme représenté sur la figure 1 ; ces pattes de fixation se retrouvent vers l'extérieur du dispositif, ce qui permet la fixation aisée de ce dernier.

On va maintenant décrire à l'appui des figures 6 à 16 un mode préféré de réalisation de la phase d'ancrage du procédé conforme à l'invention.

Dans ce mode de réalisation, l'ancrage des brins de câble 13a, 13b dans les éléments porteur 11 et porté 12, se fait essentiellement au cours du moulage des pièces 11a, 11b et 12, les brins de câble 13a, 13b ayant été préalablement insérés dans les encoches 27, 28 des étriers 26a et 26b. A l'appui des figures 6 à 16, on va décrire le moule utilisé pour réaliser le moulage des corps des éléments 11a, 11b et 12 directement sur le câble, ce qui réalise par là même l'ancrage du câble sur ces éléments.

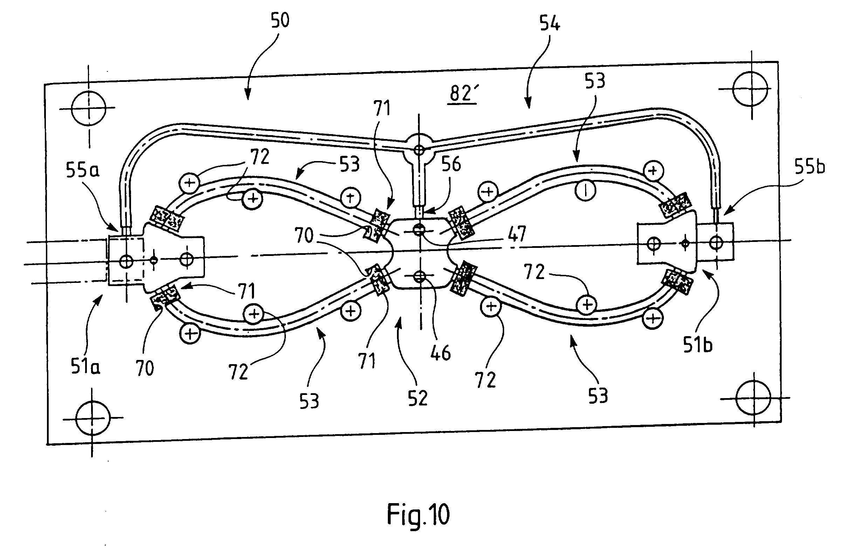

Les figures 6A et 6B illustrent, en coupe longitudinale, les parties de moule supérieure et inférieure du moule utilisé, tandis que les figures 9 et 10, illustrent respectivement selon les flèches IX et X des figures 6A, 6B ces mêmes parties de moule.

La partie inférieure de moule représentée aux figures 6B et 9 comporte un plateau 40 comportant lui-même une surface plane 82, dite "plan de joint", dans laquelle sont essentiellement agencées, d'une part, des empreintes de moulage inférieures 41a, 42 et 41b des pièces 11a, 12 et 11b et, d'autre part, une empreinte de chemin de câble 43, destinée à loger, lors de l'opération de moulage, les brins de câble 13a, 13b. Symétriquement la partie de moule supérieure illustrée aux figures 6A et 10 comprend un plateau supérieur 50 comportant lui-même une surface plane 82' également dite "plan de joint" dans laquelle sont essentiellement agencées, d'une part, les empreintes de moulage supérieures 51a, 52 et 51b des pièces 11a, 12 et 11b et, d'autre part, une empreinte de chemin de câble 53. Le plateau supérieur comporte également un canal d'injection 54 alimentant aux points d'injection 55a, 56 et 55b les empreintes de moulage 51a, 52 et 51b. Le système de moulage par injection étant par ailleurs classique tant dans sa nature que dans sa structure et son fonctionnement, il ne sera pas décrit plus en détail ici.

Le chemin de câble 53 constitué par les empreintes 43 et 53 présente une section semi-circulaire, correspondant à la section semi-circulaire du brin de câble 13a ou 13b, de telle sorte que lorsque le moule est fermé, les chemins de câble 43, 53 emprisonnent le câble 13.

L'empreinte 42 comporte quatre tétons 44a, 44b, 45a et 45b tandis que l'empreinte 52 comporte deux tétons 46 et 47.

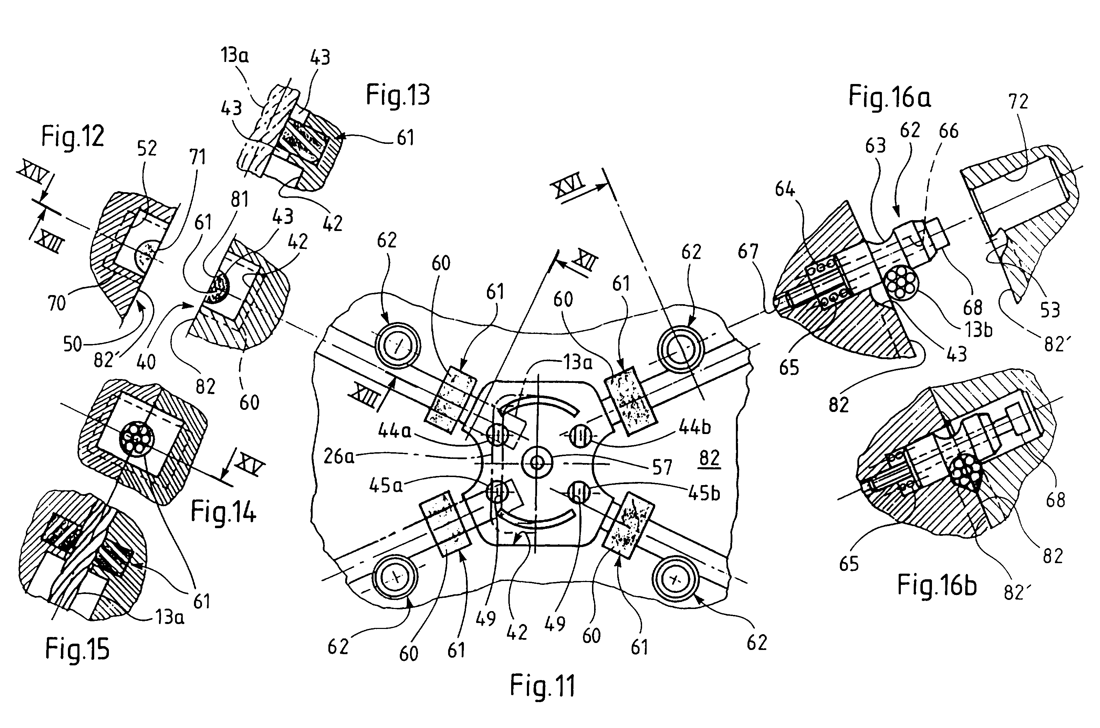

Sur la figure 11, qui est une vue agrandie de l'encart XI de la figure 9, le brin de câble 13a a été représenté en traits mixtes. Lors de l'opération de moulage, on vient positionner chacune des boucles formées respectivement par le brin de câble 13a et l'étrier 26a d'une part, et le brin de câble 13b et l'étrier 26b, d'autre part, dans les empreintes 41 et 42 et dans le chemin de câble 43. On observe, figure 11, que les étriers 26a et 26b viennent se positionner sur les tétons de support 44a, 45a, 44b, 45b. Les tétons 44a, 45, 44b, 45b comportent à cet effet chacun une encoche diamétrale 49, apte à maintenir l'étrier 26a ou 26b considéré (seul l'étrier 26a ayant été représenté en traits mixtes sur la figure 11). Similairement, les tétons 46 et 47 comportent chacun une encoche 48, apte à saisir les étriers 26a, 26b sur l'arête supérieure 55 des branches latérales de deux-ci. On observe, sur la figure 8, que lorsque les étriers 26a, 26b sont mis en place dans l'empreinte 42, leurs arêtes frontales 56 sont jointives, de telle sorte que l'encoche 48 du téton 46 ou 47 chevauche les arêtes supérieures 55 des deux étriers 26a, 26b.

L'empreinte de moulage 42 comporte également un pion central 57 destiné à recevoir l'insert 14 pour le positionner avant la fermeture du moule (l'insert 14 étant représenté en traits mixtes sur les figures 7 et 8).

On va maintenant décrire à l'appui des figures 9 à 15 une première solution préférée au problème d'étanchéité lors de l'injection. Cette première solution consiste essentiellement en l'utilisation de blocs d'élastomère. La demanderesse s'est trouvée confrontée au problème d'étanchéité car, comme le chemin de câble 43, 53 est en liaison avec les empreintes de moulage 41, 42, 51, 52, lors de l'injection, le plastique en fusion est susceptible de fuir le long des torons constituant le brin de câble. La demanderesse a cherché une solution à ce problème technique : c'est une première solution préférée qui va maintenant être décrite.

Au voisinage des jonctions entre les chemins de câble 43, 53 avec les zones de moulage 41, 42, 51, 52, il est prévu dans les plateaux 40 et 50, des logements de forme parallélépipédique 60, 70 aptes à recevoir des blocs d'élastomère parallélépipédiques 61, 71. Chaque joint 61 (plateau inférieur) 71 (plateau supérieur) vient à ras du plan de joint 82 ou 82'. Les joints 61, 71 sont destinés à être écrasés par le câble lors de la fermeture du moule comme décrit infra à l'appui des figures 12 à 15.

L'agencement des joints est illusté aux figures 12 et 13 qui montrent l'agencement du joint 61 représenté en haut à gauche de la figure 11.

Sur les figures 12 et 13, on reconnaît, sous la référence 42, le fond de l'empreinte de moulage au niveau du trait de coupe XII de la figure 11. Sur la figure 12, le chemin de câble 43 est visible, de même, (en pointillés) le logement 60 du joint en élastomère 61, ce dernier étant illustré en coupe sur la figure 13. On observe que le joint 61, aussi visible sur la figure 12, vient par sa face supérieure 81 à ras du plan de joint 82 de la première partie de moule 40.

De même, sur la figure 12 est illustrée la partie correspondante de la partie de moule supérieure 50, et l'on y reconnaît le fond de l'empreinte 52, à l'aplomb de la ligne de coupe XII, le logement 70 du joint 71, et on observe que la face supérieure de ce dernier vient à ras du plan de joint 82'.

Sur les figures 12, 13, il a été illustré le brin de câble 13a lorsque ce dernier est posé sur les joints 61 venant en travers du chemin de câble 43.

En raison du fait que, au début du moulage, les boucles de brin de câble 13a, 13b reposent sur les joints 61, l'inventeur a été confronté à un problème de maintien de celles-ci. Pour guider le câble, et le maintenir en place, jusqu'à fermeture du moule, l'inventeur a associé au chemin de câble 43, des pions de positionnement 62. L'un de ces pions est visible en détail sur les figures 16a et 16b. On observe, voir notamment figures 9, 11 et 16a, 16b, que les pions 62 viennent empiéter en partie sur le chemin de câble 43. Pour permettre le passage du câble 13, ils comportent eux-mêmes une gorge torique 63 présentant en coupe transversale une courbure semblable à celle du câble 13. Chaque pion 62, qui présente par ailleurs une forme cylindrique, est monté dans un logement cylindrique 64 au fond duquel est agencé un ressort hélicoïdal de rappel 65. Par ailleurs, le pion 62 comporte un trou axial 66, tandis qu'au fond du logement 64, un trou taraudé 67 est ménagé. L'ensemble comprend également une vis 68 traversant le trou axial 66 du pion 62, vissée dans le trou taraudé 67. On observe que de ce fait le pion 62 est mobile le long du corps de la vis 68 à l'intérieur du logement 64, mais que lorsque le moule est ouvert, le pion vient en butée contre la tête de vis 68 par l'effet du ressort de rappel 65.

La partie de moule 50 comporte, à l'aplomb des pions 62, des logements cylindriques 72 aptes à loger les pions 62 lors de la fermeture du moule.

On va maintenant décrire diverses étapes de ce mode de réalisation de la phase d'ancrage.

Comme exposé plus haut, la première opération consiste à constituer les boucles avec les brins de câble 13a et 13b, en insérant les extrémités 29 et 30 des brins de câble dans les encoches 27 et 28 de l'étrier 26a ou 26b. On obtient ainsi deux boucles telles que celles illustrées sous la référence 13b en figure 3.

Lors de la seconde étape, on positionne chacune des boucles ainsi confectionnées dans la partie inférieure de moule 40. Les étriers 26a et 26b reposent alors sur les tétons 44a, 45a, 44b, 45b, comme expliqué plus haut. Le câble lui-même est inséré entre les pions 62 agencés de part et d'autre du chemin du câble 43. Comme expliqué à l'appui de la figure 16a, le câble s'insère également dans les gorges 63 des pions 62. Ils reposent alors sur la face supérieure des joints en élastomère 61, et se trouvent de ce fait disposés et maintenus au-dessus du plan de joint 82 de la première partie de moule 40 (voir notamment les figures 16a, 12 et 13 où le câble 13a ou 13b est illustré).

L'insert 14 est alors positionné sur le téton de positionnement 57 lors de cette seconde étape.

Dans l'étape suivante, on procède alors à la fermeture du moule. La mécanique de moulage, et notamment les supports des parties de moule sont classiques et n'ont pas à être décrits en détail ici.

Lors de la fermeture, les logements 72 de la partie de moule supérieure 50 viennent chevaucher les pions 62 correspondants. Lorsque le chemin de câble 53 vient au contact avec le câble 13a, 13b, il exerce une pression sur ce dernier et l'entraîne en le forçant à pénétrer dans le chemin de câble 43 de la partie basse de moule 40, le câble entraînant vers le bas les pions 62 qui viennent comprimer le ressort 65. Parallèlement une pression est exercée par le câble 13a ou 13b contre les joints 61, 71, de telle sorte que ces derniers se déforment élastiquement, et viennent entourer le câble.

Lorsque les plans de joint 82, 82' sont au contact (voir figures 14, 15 et 16b), le câble 13a, 13b est emprisonné dans les chemins de câble 43, 53, tandis que les pions 62 ont été entraînés à l'intérieur du logement 72, à l'encontre du ressort 65, et viennent prendre la position illustrée en figure 16b. Par ailleurs, l'élastomère constituant les joints 61, 71 étant incompressible, alors que les joints 61, 71 sont engagés dans un logement correspondant à leur volume initial, ils se déforment élastiquement tout en ayant tendance à retrouver leur volume initial : de ce fait ils entourent le câble et pénètrent dans les interstices entre les torons du brin de câble, épousant la forme externe de ces derniers et réalisant de ce fait l'étanchéité voulue.

Lors d'une quatrième étape, on procède à l'injection de plastique en fusion par le canal 54, en mettant en oeuvre des moyens classiques dans l'art du moulage par injection.

On procède ensuite à l'ouverture du moule et à l'éjection de l'ensemble, qui présente alors la forme illustrée en figure 2.

On observera que le câble est en réalité maintenu avant et après fermeture du moule par les gorges 63 des pions 62 : dans ces conditions, les chemins de câble 43, 53 peuvent ne pas présenter une section correspondant à celle du câble ; il faut, et suffit, qu'un espace soit ménagé dans les plateaux 40 et 50 pour loger l'épaisseur du câble lorsque le moule est fermé.

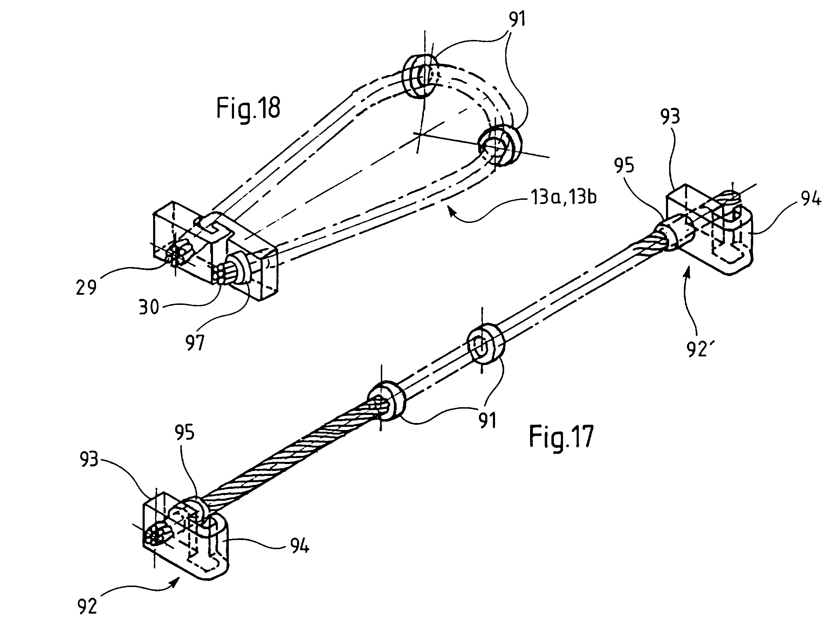

On va maintenant décrire à l'appui des figures 17 à 27 un autre mode de réalisation du dispositif et du procédé conforme à la présente invention.

Dans la variante qui va être décrite, les numéros de référence précédemment utilisés sont conservés pour les éléments présentant une structure similaire à ceux déjà décrits.

Cette variante de réalisation est particulièrement avantageuse lorsque les câbles 13a et 13b présentent une section relativement important (par exemple de l'ordre de 16 mm). En effet, lorsque le câble présente de telles sections, les torons présentent, eux, des dimensions relativement importantes puisqu'ils peuvent être d'un diamètre de l'ordre de 5 mm. Dans ces conditions, les sillons inter-torons présentent un volume particulièrement important, ce qui peut poser un problème d'étanchéité dans l'hypothèse où le moulage se ferait avec le procédé d'étanchéité décrit plus haut. En effet, il est possible que l'élastomère des joints 61, 71 ne se déforme pas suffisamment pour remplir les volumes inter-torons, de telle sorte que du plastique en fusion sous presssion pourrait fuire lors de l'injection.

Ce problème est résolu dans l'aspect de l'invention décrit ici en munissant les brins de câble 13a, 13b de joints constitués par des portées cylindriques d'étanchéité directement moulées sur le câble. Ces portées portent sur les figures 17 et 18 les références 91 et 95. Les portées 91 se présentent ici sous forme de bagues indépendantes, tandis que les portées 95 sont associées à des pièces 92, 92' décrites ci-après.

Dans la présente variante, il est également proposé de mouler en aluminium par gravité sur le câble deux dispositifs de pré-ancrage, en l'espèce des pièces de maintien 92, 92' destinées à remplacer les étriers 26a et 26b précédemment décrits. Ces pièces, qui sont de forme sensiblement différente, comportent, tous deux, un corps, globalement parallélépipédique 93, agencé autour du câble 13, portant une partie 94 en forme de crochet. Les deux pièces 92, 92' sont de forme sensiblement différente et agencées sur le câble avec leur crochet 94 suivant la même orientation, de telle sorte que lorsque l'on forme une boucle, comme illustré en figure 18, les parties 94 formant crochets viennent s'encliqueter l'une dans l'autre, pour assurer ainsi le maintien provisoire, lors des opérations de moulage, de la boucle de câble 13a ou 13b, fonction préalablement assurée par les étriers 26a, 26b.

Les pièces 92, 92' portent également une portée cylindrique d'étanchéité 95. De manière à présenter la même longueur et la même prise sur le câble que la pièce 92, la pièce de maintien 92' porte également une portion annulaire de renforcement 97.

On observe également que les pièces 92, 92' participent également à la rigidité de l'élément porté 12, fonction également assurée dans le modes de réalisation préalablement décrit par les étriers 26a, 26b.

Par ailleurs, lors des opérations de moulage par gravité, qui vont être décrites ci-après, l'aluminium constituant les pièces 92, 92' coule entre les torons et les fils constituant le câble 13, ce qui participe à une bonne solidarisation des pièces 92, 92' sur le câble 13.

Enfin, comme dans le mode de réalisation préalablement décrit, lors des opérations d'injection du plastique en fusion, ce dernier pénètre également entre les torons et les fils des extrémités 29, 30 des brins de câble 13a, 13b, créant ainsi une augmentation de leur volume, ce qui augmente la résistance à l'arrachement de l'ensemble.

Pour le reste, le dispositif antivibratoire/antichoc présente la même structure que celle décrite plus haut à l'appui des figures 1 à 4.

On va tout d'abord décrire le procédé permettant de mouler par gravité, directement sur le câble 13, les pièces 91, 92 et 92'.

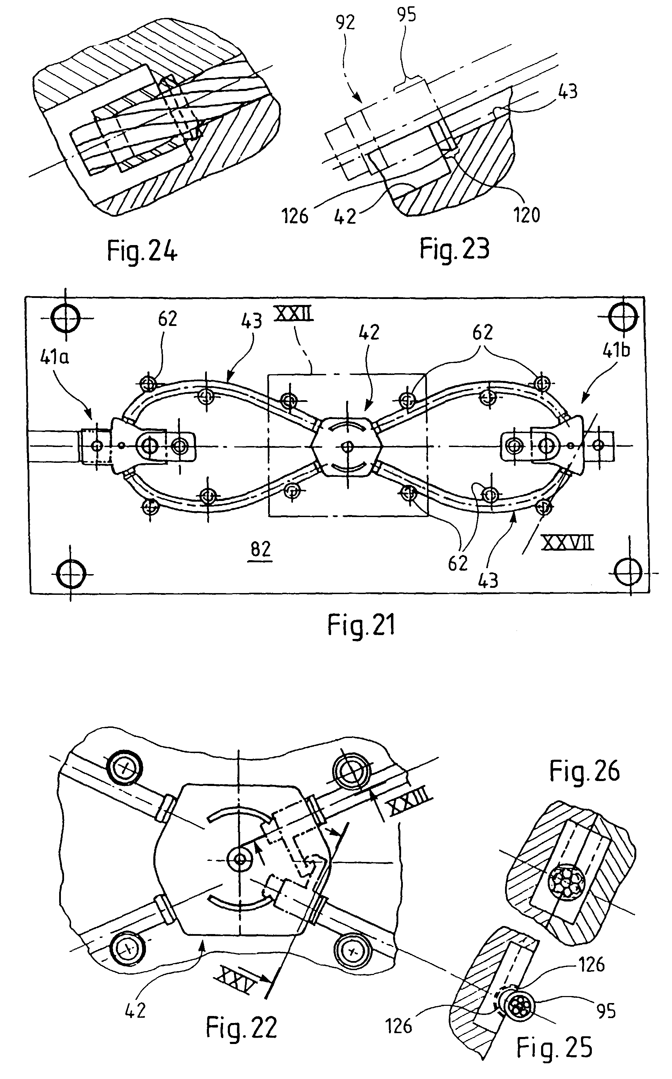

Le moule utilisé dans ce mode de réalisation est représenté schématiquement sur les figures 19 et 20. Le moule 100 illustré sur ces figures comporte une partie supérieure de moule 101 et une partie inférieure de moule 102. Le moule 100 est illustré en position fermée, le plan de joint 103 de la partie inférieure de moule 102 et celui 103' de la partie de moule supérieure 101 étant au contact. Sur la figure 20, la partie inférieure de moule 102 a également été représentée en trait mixte en position ouverte.

Sur la figure 19, l'empreinte de la partie de moule inférieure 102 a été représentée. Cette empreinte comporte :
- cinq empreintes de chemin de câble 104, destinées à recevoir le brin de câble 13a, 13b, lors de l'opération de moulage ;
- deux empreintes 105 correspondant aux bagues d'étanchéité 91 ; et
- deux empreintes 106, 106' dont la forme correspond à celle des pièces 92, 92', y compris celle des portées 95 et celle de la portion 97 associée à la pièce 92'.

La partie de moule supérieure comporte des empreintes semblables, surmontées d'un canal 109 de section relativement large et susceptible de permettre l'écoulement d'aluminium en fusion par gravité.

Ces canaux d'écoulement ne seront pas décrits plus en détail ici, le moulage de pièces en aluminium par gravité étant bien connu de l'homme de l'art.

Pour réaliser le brin de câble 13a ou 13b avec les pièces d'aluminium illustrées en figure 17, on positionne tout d'abord un brin de câble dans le chemin de câble constitué par les tronçons 104. On observe que le brin de câble chevauche alors les empreintes 105, 106, 106'. On ferme alors le moule par tout moyen connu et on procède à la coulée d'aluminium par tout moyen connu.

Lors du démoulage, une pièce telle que celle illustrée en figure 17 est obtenue, après avoir sectionné et meulé les points correspondant aux intersections entre les empreintes de la partie moule supérieur et le canal d'écoulement 109.

On observe que lors de la coulée, l'aluminium en fusion pénètre dans les interstices entre les torons et fils constituant le câble 13 à l'aplomb des zones de moulage 105, 106, 106'. Le volume de ces interstices est ainsi comblé.

On procède ensuite à l'assemblage des crochets 94 comme illustré sur la figure 18.

Le moule utilisé pour procéder à l'injection des pièces 11a, 11b et 12 est semblable à celui décrit ci-dessus, notamment à l'appui des figures 6 à 11. Seule la partie inférieure de moule est illustrée en figures 21 et 22. On note que les logements prévus pour les joints d'élastomère ont disparu. Ces logements sont remplacés par des logements cylindriques d'un diamètre interne correspondant au diamètre externe des portées 91 ou 95. Ces logements sont adjacents à la jonction entre le chemin de câble 43 et les empreintes 41 ou 42. La partie supérieure de moule, non représentée, comporte un agencement identique.

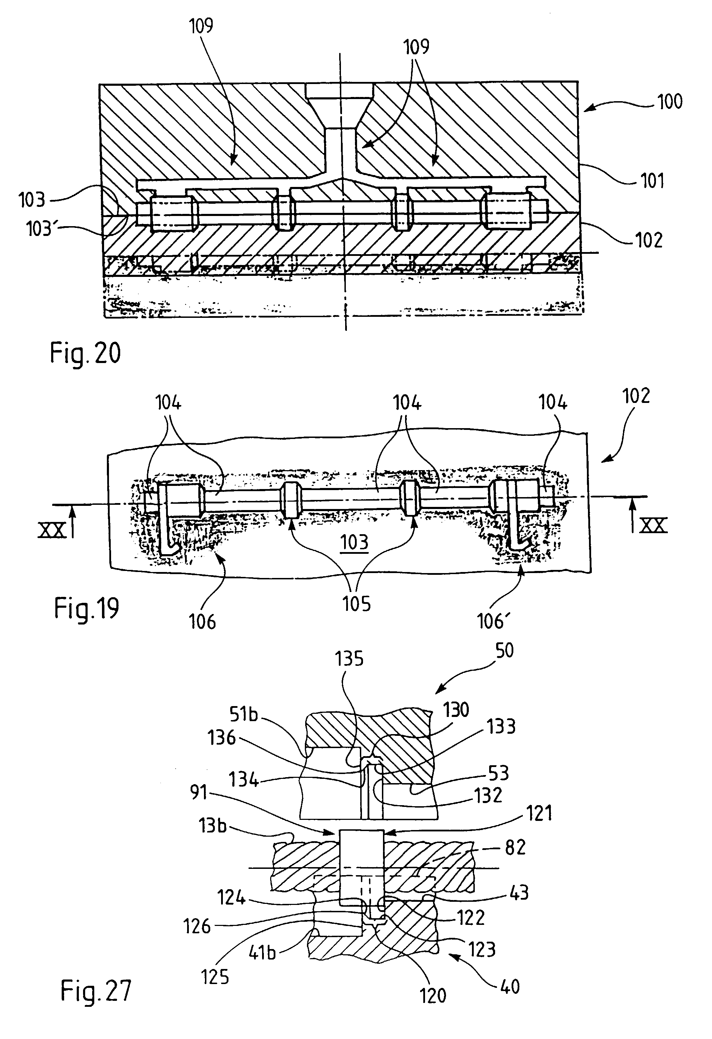

L'un de ces logements est représenté en détail sur les figure 23 et 24, qui illustrent cet agencement à l'endroit de la ligne de coupe XXIII, ainsi qu'à la figure 27.

La figure 27 est une vue en coupe partielle selon la flèche XXVII de la figure 21. Elle représente une jonction entre le chemin de câble 43 et l'empreinte 41b. Le logement susmentionné correspond à la zone marquée par l'accolade 120. Le câble 13b est représenté sur cette figure. On observe que la bague 91 a été moulée sur le câble 13b en étant positionnée sur ce dernier de manière à ce qu'une de ses faces 121, dite "externe" car tournée vers l'extérieur de l'empreinte 41b vienne contre une paroi annulaire 122 d'extension verticale du logement 120 délimitant ce dernier côté chemin de câble. Le fond du logement est délimité par une paroi cylindrique 123 et une paroi conique 124. La paroi conique 124 est agencée vers l'intérieur du logement 120, et elle est limitée par une paroi d'extension verticale 125 délimitant l'empreinte 41b, au niveau de l'intersection entre le chemin de câble et l'empreinte elle-même.

La paroi d'extension verticale 125 et la paroi conique 124 définissent une arête vive de forme semi-circulaire 126.

Sur la figure 27, on a représenté en coupe partielle la partie de moule supérieure 50 ; on observe qu'au niveau de l'intersection entre l'empreinte 51b et le chemin de câble 53 la présence d'un logement 130 symétrique et semblable à celui qui vient d'être décrit et délimité par une arête vive 136. Par conséquent, l'arête vive semi-circulaire 136 se trouve inscrite dans un même plan que l'arête vive semi-circulaire 126.

On observe, sur la figure 27, que la bague 91 présente une extension axiale supérieure à celle des logements 120, 130, de telle sorte que la bague 91 pénètre partiellement à l'intérieur de la zone d'empreinte 42b, 52b.

La figure 23 est une vue en coupe partielle similaire à la figure 27, la coupe partielle étant toutefois faite selon la flèche XXIII de la figure 22, c'est-à-dire au niveau de l'intersection entre le chemin de câble 43 et la zone d'empreinte 42. On observe que le logement 120 qui y est illustré présente le même agencement, et notamment une arête vive 126 venant à l'aplomb de la portée cylindrique 95 de la pièce 92. La partie de moule 50 présente, à l'aplomb du logement 120 associé à l'empreinte 42, un logement 130 de structure identique.

Des agencement similaire sont faits au niveau de chacune des intersections du chemin de câble 43, 53 avec l'une des zones de moulage 41, 42 ou 51, 52.

On observe que conformément à cet aspect de l'invention, l'arête vive 126 (ou 136) présente une géométrie similaire à celle de la directrice des surfaces constituant les portées cylindriques 91, 95 mais toutefois avec des dimensions sensiblement réduites. Lorsque les surfaces cylindriques sont à directrice circulaire (comme dans le mode de réalisation décrit et représenté ici), les arêtes vives 126, 136 présentent un diamètre sensiblement inférieur à celui de la directrice circulaire. Dans ce mode de réalisation, les portées cylindriques 91 et 95 présentent un diamètre externe de 11 mm (le diamètre du câble étant toujours de 8 mm). Le diamètre des cercles dans lequel s'incrivent les arêtes vives 126, 136 est de 9,5 mm.

Conformément à l'invention, les arêtes vives viennent s'incruster dans les portées annulaires, réalisant de ce fait l'étanchéité voulue. Cette incrustation est rendue possible par le fait que les parties de moule 40, 50 sont réalisées en une matière (ici en acier) qui présente une dureté supérieure à celle des portées cylindriques (ici de l'aluminium). La figure 24 illustre le moule en position fermée, au niveau de l'une des portées annulaires. On observe qu'effectivement les arêtes 126 et 136 ont pénétré et se sont incrustées dans la portée cylincrique 95 de la pièce 92 représentée sur cette figure. Il en va de même évidemment au niveau des autres portées annulaires 91 ou 95 agencées sur les brins de câble 13a ou 13b.

Dans ce mode de réalisation, avant fermeture et pendant la fermeture du moule, le câble 13a ou 13b est maintenu par des pions 62 identiques à ceux précédemment décrits. Toutefois, lors de la seconde étape (positionnement des boucles), celles-ci reposent par les portées d'étanchéité 91, 95 qui viennent en appui sur les arêtes vives 126, sans pouvoir pénétrer complètement dans le logement, en raison de la différence entre le diamètre externe de la portée 91 ou 95 et celle de l'arête vive 126 (voir figure 25). La hauteur des pions 62 est alors réglée par la vis 68, de manière à amener la gorge 63 à la hauteur du câble.

Les opérations de moulage restent pour le reste identiques à celles préalablement décrites.

Après éjection de l'ensemble, ce dernier présente globalement la même forme que celle illustrée en figure 2, à l'exception des portées 91, 95 qui restent visibles.

On observera que la présente invention permet d'obtenir, à l'issue de la phase d'ancrage, un dispositif antivibratoire/antichocs dont la fabrication est quasiment terminée, et susceptible de pouvoir être stocké et transporté à plat.

Au cours d'une seconde phase, on assemble l'élément modulaire constitué par les pièces 11a, 11b.

Dans ce mode de réalisation, on procède, comme décrit plus haut, à l'enfichage de la languette 15 dans le logement 17 et au clavetage au moyen de la pièce 22.

Cette seconde phase peut être réalisée sur le site d'utilisation du dispositif antivibratoire/antichocs décrit ici.

Bien entendu la présente invention ne se limite nullement aux modes de réalisation choisis et représentés. Elle englobe toutes variantes à la portée de l'homme de l'art.

En particulier, ce dernier est libre de prévoir un nombre de boucles ou de brins de câble supérieur à 2.

L'homme de l'art saura par ailleurs mettre en oeuvre tout autre type de moulage des éléments porteurs et portés et plus particulièrement un moulage en aluminium par gravité.

Bien que le mode de réalisation préféré concerne des éléments porteurs et portés formés par moulage de matière plastique, l'utilisation d'aluminium peut avoir pour avantages supplémentaires de permettre la réalisation d'éléments porteurs et portés plus rigides que ceux en matière plastique et résistant en outre aux solvants, à l'humidité ainsi qu'à la chaleur.

## Revendications

1. Procédé de fabrication d'un dispositif antivibratoire/antichocs du genre comportant un élément porteur (11) et un élément porté (12) liés par du câble (13a, 13b), les éléments porteur et porté comportant chacun au moins deux points d'ancrage pour le câble disposés au voisinage des sommets d'un polygône à n sommets, le câble étant alternativement ancré sur un point (140a, 140b) de l'élément porteur (11) et sur un point (141, 141') de l'élément porté (12) et étant orienté sur les points d'ancrage (140a) d'un premier (11) au moins desdits éléments dans une direction globalement transversale à la direction radiale (23a, 23b), caractérisé en ce qu'on utilise comme élément porteur ou porté un élément modulaire (11a, 11b) comportant, d'une part, des modules d'ancrage individuels (11a, 11b) et, d'autre part, des moyens d'assemblage (15, 17, 21) de ceux-ci, et en ce que :
- dans une première phase dite "d'ancrage", on ancre le câble, d'une part, dans chacun desdits modules d'ancrage de l'élément modulaire et, d'autre part, dans l'autre élément, et
- dans une seconde phase, on assemble l'élément modulaire.

2. Procédé selon la revendication 1, caractérisé en ce qu'on choisit comme premier élément, ledit élément modulaire (11).

3. Procédé selon l'une quelconque des revendications 1 ou 2, caractérisé en ce qu'on subdivise ledit câble en autant de brins de câble (13a, 13b) que de modules d'ancrage, chaque brin de câble étant associé à un module d'ancrage.

4. Procédé selon l'une quelconque des revendications 1 à 3, caractérisé en ce que dans la première phase, lors d'une première étape, on ancre préalablement le câble dans une pluralité de dispositifs de pré-ancrage (26a, 26b, 92, 92'), de manière à former autant de boucles de câble que de modules d'ancrage.

5. Procédé selon l'une quelconque des revendications 1 à 4, caractérisé en ce que l'un au moins desdits 5 éléments porteur et porté est au moins partiellement fabriqué par moulage, ce moulage intervenant au cours de ladite phase d'ancrage.

6. Procédé selon l'une quelconque des revendications 1 à 4, caractérisé en ce que lesdits éléments porteur 10 et porté sont, au moins partiellement, fabriqués par moulage, ce moulage intervenant au cours de ladite phase d'ancrage.

7. Procédé selon l'une quelconque des revendications 5 ou 6, prises en combinaison avec la revendication 4, caractérisé en ce que, dans la phase d'ancrage, on positionne les boucles réalisées lors de la première étape, dans le moule utilisé pour réaliser ledit moulage.

8. Procédé selon l'une quelconque des revendications 5, 6, prises en combinaison avec la revendication 3, caractérisé en ce que dans la phase d'ancrage on forme avec 20 chacun desdits brins de câble une boucle, puis on positionne celle-ci dans le moule utilisé pour ledit moulage.

9. Procédé selon l'une quelconque des revendications 5 à 8, caractérisé en ce que l'on munit le moule utilisé pour ledit moulage de moyens de guidage destinés à 25 maintenir le câble lors de l'opération de moulage.

10. Procédé selon l'une quelconque des revendications 5 à 8, caractérisé en ce qu'on utilise pour l'opération de moulage un moule comportant autant de zones de moulage que de pièces à mouler et un espace propre à loger l'épaisseur du câble lorsque le moule est fermé.

11. Procédé selon l'une quelconque des revendications 5 à 10, caractérisé en ce qu'on utilise pour ledit moulage des moyens de moulage permettant le moulage simultané de chacune des pièces à mouler.

12. Procédé selon l'une quelconque des revendications 5 à 11, caractérisé en ce que chaque zone de moulage comporte au moins deux passages adaptés à recevoir le câble, lorsque le moule est fermé, chacun de ces passages étant associé à un joint d'étanchéité.

13. Procédé selon la revendication 12, caractérisé en ce qu'on utilise comme joint d'étanchéité un bloc d'élastomère, adapté à se conformer, partiellement au moins, autour du câble.

14. Procédé selon la revendication 13, caractérisé en ce que la conformation du joint autour du câble résulte d'une déformation élastique de ce dernier lors de la fermeture du moule, préalablement à l'opération de moulage en tant que telle.

15. Procédé selon l'une quelconque des revendications 5 à 14, caractérisé en ce que le moulage est un moulage par injection.

16. Procédé selon l'une quelconque des revendications 1 à 14, caractérisé en ce que l'on munit les éléments porteur et porté de moyens de maintien d'un ressort hélicoïdal, tandis que dans une troisième phase, on insère ledit ressort hélicoïdal entre les éléments porteur et porté.

17. Procédé selon l'une quelconque des revendications 7 à 16, caractérisé en ce que pour positionner le câble à l'intérieur du moule on utilise des pions de positionnement de la zone dans laquelle doit être positionné le câble dans le moule.

18. Procédé selon la revendication 17, caractérisé en ce que les pions comportent une gorge apte à recevoir le câble.

19. Procédé selon la revendication 18, caractérisé en ce que les pions sont associés à des moyens d'escamotage permettant leur logement dans une première partie du moule, lorsque ce dernier est fermé, des moyens élastiques de rappel étant associés à ces moyens d'escamotage, pour que les pions reprenent automatiquement une position propre à recevoir et maintenir un câble, lorsque le moule est ouvert.

20. Procédé selon l'une quelconque des revendications 4 à 19, caractérisé en ce que les dispositifs de pré-ancrage 26a, 26b se présentent sous forme d'étrier.

21. Procédé selon l'une quelconque des revendications 4 à 19, caractérisé en ce que les moyens de pré-ancrage sont constitués par des pièces de maintien 92, 92' comportant des crochets 94 directement moulés sur les extrémités des brins de câble.

22. Procédé selon l'une quelconque des revendications 11, 15 à 21 en ce qu'on utilise comme joint d'étanchéité une portée cylindrique 91, 95 directement moulée sur le câble et réalisée en un matériau présentant une dureté inférieure au matériau utilisé pour réaliser le moule, tandis qu'au niveau de la jonction entre les passages pour le câble et les empreintes des pièces à mouler, le moule comporte une arête vive de forme semblable à celle de la directrice de la surface cylindrique desdites portées (91, 95), mais de dimensions sensiblement réduites.

23. Dispositif antivibratoire/antichocs du genre comportant un élément porteur (11) et un élément porté (12) liés par du câble (13a, 13b), les éléments porteur et porté comportant chacun au moins deux points d'ancrage pour le câble, disposés au voisinage des sommets d'un polygone à n sommets, le câble étant alternativement ancré sur un point (140a, 149b) de l'élément porteur (11) et sur un point (141, 141') de l'élément porté (12) et étant orienté sur les points d'ancrage (140a, 140b) d'un premier (11) au moins desdits éléments dans une direction globalement transversale à la direction radiale (23a, 23b), caractérisé en ce qu'on utilise comme élément porteur ou porté un élément modulaire (11) comportant d'une part, des modules d'ancrage individuels (11a, 11b) et, d'autre part, des moyens d'assemblage (15, 17, 21) de ceux-ci.

24. Dispositif selon la revendication 23, caractérisé en ce qu'il comporte un ressort hélicoïdal (35) agencé entre les éléments porteur et porté.

25. Dispositif selon la revendication 24, caractérisé en ce que les éléments porteur (11) et porté (12) comportent des moyens de maintien (24, 25, 33) du ressort hélicoïdal (35).

## Patentansprüche

1. Verfahren zur Herstellung einer vibrationsdämpfenden/stoßdämpfenden Vorrichtung von der Art, welche ein Tragelement (11) und ein Anbauelement (12) aufweist, die durch ein Seil (13a,13b) verbunden werden, wobei das Trag- und das Anbauelement jeweils mindestens zwei Verankerungspunkte für das Seil aufweisen, die in der Nähe der Spitzen eines Polygons mit n Spitzen angeordnet werden, wobei das Seil abwechselnd an einem Punkt (140a,140b) des Tragelements (11) und an einem Punkt (141,141') des Anbauelements (12) verankert wird und an den Verankerungspunkten (140a) mindestens eines ersten (11) der Elemente in eine Richtung orientiert wird, die im allgemeinen transversal zur Radialrichtung (23a,23b) ist, **dadurch gekennzeichnet**, daß man als Tragelement oder Anbauelement ein Modulelement (lla,llb) verwendet, das einerseits individuelle Verankerungsmodule (11a,11b) und andererseits Mittel (15,17,21) zur Verbindung derselben aufweist, und dadurch, daß:
- man in einer ersten Phase, die "Verankerungsphase" genannt wird, das Seil auf der einen Seite in jedem der Verankerungsmodule des Modulelements und auf der anderen Seite im anderen Element verankert und
- man in einer zweiten Phase das Modulelement zusammenbaut.

2. Verfahren nach Anspruch 1, dadurch gekennzeichnet, daß man als erstes Element das Modulelement (11) auswählt.

3. Verfahren nach einem der Ansprüche 1 oder 2, dadurch gekennzeichnet, daß man das Seil in ebensoviele Seilstücke (13a,13b) wie Verankerungsmodule unterteilt, wobei jedes Seilstück mit einem Verankerungsmodul verbunden wird.

4. Verfahren nach einem der Ansprüche 1 bis 3, dadurch gekennzeichnet, daß man in der ersten Phase in einem ersten Schritt das Seil vorher in einer Vielzahl von Vorverankerungsvorrichtungen (26a,26b,92,92') so verankert, daß ebensoviele Seilschleifen wie Verankerungsmodule gebildet werden.

5. Verfahren nach einem der Ansprüche 1 bis 4, dadurch gekennzeichnet, daß mindestens eines der Trag- bzw. Anbauelemente zumindest teilweise durch Gießen hergestellt wird, wobei dieses Gießen im Laufe der Verankerungsphase stattfindet.

6. Verfahren nach einem der Ansprüche 1 bis 4, dadurch gekennzeichnet, daß die Trag- bzw. Anbauelemente zumindest teilweise durch Gießen hergestellt werden, wobei dieses Gießen im Lauf der Verankerungsphase stattfindet.

7. Verfahren nach einem der Ansprüche 5 oder 6 in Kombination mit Anspruch 4, dadurch gekennzeichnet, daß man in der Verankerungsphase die im ersten Schritt gemachten Schleifen in der Gußform anordnet, die dazu verwendet wird, den Guß zu machen.

8. Verfahren nach einem der Ansprüche 5, 6 in Kombination mit Anspruch 3, dadurch gekennzeichnet, daß man in der Verankerungsphase mit jedem der Seilstücke eine Schleife bildet, worauf man diese in der Gußform anordnet, die für den Guß verwendet wird.

9. Verfahren nach einem der Ansprüche 5 bis 8, dadurch gekennzeichnet, daß man die Gußform, die für den Guß verwendet wird, mit Führungsmitteln ausstattet, die dazu bestimmt sind, das Seil während des Gießvorgangs festzuhalten.

10. Verfahren nach einem der Ansprüche 5 bis 8, dadurch gekennzeichnet, daß man für den Gießvorgang eine Gußform verwendet, die ebensoviele Gußzonen wie zu gießende Teile und einen Zwischenraum aufweist, der dafür geeignet ist, die Dicke des Seils aufzunehmen, während die Gußform geschlossen ist.

11. Verfahren nach einem der Ansprüche 5 bis 10, dadurch gekennzeichnet, daß man für das Gießen Gußmittel verwendet, die das gleichzeitige Gießen jedes der zu gießenden Stücke gestatten.

12. Verfahren nach einem der Ansprüche 5 bis 11, dadurch gekennzeichnet, daß jede Gußzone mindestens zwei Führungen aufweist, die dafür ausgelegt sind, das Seil aufzunehmen, während die Gußform geschlossen ist, wobei jede dieser Führungen mit einer Dichtung verbunden ist.

13. Verfahren nach Anspruch 12, dadurch gekennzeichnet, daß man als Dichtung einen Elastomerblock verwendet, der dafür ausgelegt ist, sich zumindest teilweise um das Seil herum anzufügen.

14. Verfahren nach Anspruch 13, dadurch gekennzeichnet, daß das Anfügen der Dichtung um das Seil herum eine elastische Deformation dieses Letzteren während des Schließens der Gußform vor dem Gießvorgang als solchem zur Folge hat.

15. Verfahren nach einem der Ansprüche 5 bis 14, dadurch gekennzeichnet, daß der Guß ein Spritzguß ist.

16. Verfahren nach einem der Ansprüche 1 bis 14, dadurch gekennzeichnet, daß man das Trag- und das Anbauelement mit Mitteln zum Festhalten einer Schraubenfeder ausstattet, während man in einer dritten Phase die Schraubenfeder zwischen das Trag- und das Anbauelement einführt.

17. Verfahren nach einem der Ansprüche 7 bis 16, dadurch gekennzeichnet, daß man zum Positionieren des Seils im Inneren der Gußform Positionierungsmetallstücke der Zone verwendet, in der das Seil in der Gußform positioniert werden muß.

18. Verfahren nach Anspruch 17, dadurch gekennzeichnet, daß die Metallstücke eine zur Aufnahme des Seils geeignete Vertiefung aufweisen.

19. Verfahren nach Anspruch 18, dadurch gekennzeichnet, daß die Metallstücke mit Mitteln zum Einfahren verbunden werden, die ihre Aufnahme in einen ersten Teil der Gußform gestatten, während diese Letztere geschlossen ist, wobei elastische Rückholmittel mit diesen Mitteln zum Einfahren verbunden werden, damit die Metallstücke automatisch wieder eine geeignete Position zum Aufnehmen und Festhalten eines Seils einnehmen, wenn die Gußform geöffnet wird.

20. Verfahren nach einem der Ansprüche 4 bis 19, dadurch gekennzeichnet, daß die Vorverankerungsvorrichtungen (26a,26b) in Form von Bügeln bestehen.

21. Verfahren nach einem der Ansprüche 4 bis 19, dadurch gekennzeichnet, daß die Vorverankerungsmittel aus Teilen (92,92') zum Festhalten gebildet werden, die Haken (94) aufweisen, die direkt auf die Enden der Seilstücke aufgegossen werden.

22. Verfahren nach einem der Ansprüche 11, 15 bis 21, dadurch gekennzeichnet, daß man als Dichtung eine zylindrische Fläche (91,95) verwendet, die direkt auf das Seil gegossen wird und aus einem Material hergestellt ist, das eine geringere Festigkeit als das für die Herstellung der Gußform verwendete Material aufweist, während die Gußform auf der Höhe des Verbindungsstücks zwischen den Führungen für das Seil und den Formen der zu gießenden Stücke eine scharfe Kante von ähnlicher Form wie diejenige der Leitgeraden der zylindrischen Oberfläche der Auflageflächen (91,95), aber mit deutlich verringerten Abmessungen, aufweist.

23. Vibrationsdämpfende/stoßdämpfende Vorrichtung von der Art, welche ein Tragelement (11) und ein Anbauelement (12)aufweist, die durch ein Seil (13a,13b) verbunden sind, wobei das Trag- und das Anbauelement jeweils mindestens zwei Verankerungspunkte für das Seil aufweisen, die in der Nähe der Spitzen eines Polygons mit n Spitzen angeordnet sind, wobei das Seil abwechselnd an einem Punkt (140a,140b) des Tragelements (11) und an einem Punkt (141,141') des Anbauelements (12) verankert ist und an den Verankerungspunkten (140a,140b) mindestens eines ersten (11) der Elemente in eine Richtung orientiert ist, die im allgemeinen transversal zur Radialrichtung (23a,23b) ist, **dadurch gekennzeichnet**, daß man als Tragelement oder Anbauelement ein Modulelement (11) verwendet, das einerseits individuelle Verankerungsmodule (lla,llb) und andererseits Mittel (15,17,21) zur Verbindung derselben aufweist.

24. Vorrichtung nach Anspruch 23, dadurch gekennzeichnet, daß sie eine Schraubenfeder (35) aufweist, die zwischen dem Tragelement und dem Anbauelement angeordnet ist.

25. Vorrichtung nach Anspruch 24, dadurch gekennzeichnet, daß das Tragelement (11) und das Anbauelement (12) Mittel (24,25,33) zum Festhalten der Schraubenfeder (35) aufweisen.

## Claims

1. Process of manufacture of an antivibration/antishock device of the type comprising as carrier element (11) and a carried element (12) linked by cable (13a, 13b), the carrier and carried elements each having at least two anchoring points for the cable disposed in the vicinity of the apexes of a polygon with n apexes, the cable being alternately anchored to a point (140a, 140b) of the carrier element (11) and to a point (141, 141') of the carried element (12), and being oriented on the anchoring points (140a) of at least a first (11) of the said elements in a direction transverse overall to the radial direction (23a, 23b), characterised in that there is used as the carrier or carried element a modular element (11a, 11b) including, on the one hand, individual anchoring modules (11a, 11b) and, on the other hand, assembly means (15, 17, 21) for these, and in that:
- in a first so-called "anchoring" phase, the cable is anchored, on the one hand, in each of said anchoring modules of the modular element and, on the other, in the other element, and
- in a second phase, the modular element is assembled.

2. Process according to Claim 1, characterised in that the said modular element (11) is chosen as the first element.

3. Process according to either one of Claims 1 or 2, characterised in that the said cable is subdivided into as many cable strands (13a, 13b) as there are anchoring modules, each cable strand being associated with one anchoring module.

4. Process according to any one of Claims 1 to 3, characterised in that, in the first phase, during a first step, the cable is first anchored in a plurality of pre-anchoring devices (26a, 26b, 92, 92'), in order to form as many cable loops as there are anchoring modules.

5. Process according to any one of Claims 1 to 4, characterised in that at least one of the said carrier and carried elements is at least partially manufactured by moulding, this moulding taking place the during the said anchoring phase.

6. Process according to any one of Claims 1 to 4, characterised in that the said carrier and carried elements are, at least partially, manufactured by moulding, this moulding taking place during the said anchoring phase.

7. Process according to either one of Claim 5 or 6, taken in combination with Claim 4, characterised in that, in the anchoring phase, the loops made in the first step are positioned in the mould used to effect the said moulding.

8. Process according to either one of Claim 5 or 6, taken in combination with Claim 3, characterised in that, in the anchoring phase, a loop is formed with each of the said cable strands, and this is then positioned in the mould used for the said moulding.

9. Process according to any one of Claims 5 to 8, characterised in that the mould used for the said moulding is provided with guiding means intended to hold the cable during the moulding operation.

10. Process according to any one of Claims 5 to 8, characterised in that, for the moulding operation, a mould is used having as many moulding zones as there are parts to be moulded, and a space able to accommodate the thickness of the cable when the mould is closed.

11. Process according to any one of Claims 5 to 10, characterised in that, for the said moulding, moulding means are used which permit the simultaneous moulding of each of the parts to be moulded.

12. Process according to any one of Claims 5 to 11, characterised in that each moulding zone has at least two passages adapted to receive the cable, when the mould is closed, each of these passages being associated with a sealing joint.

13. Process according to Claim 12, characterised in that, as a sealing joint, an elastomer block is used which is adapted to fit, at least partially, around the cable.

14. Process according to Claim 13, characterised in that the fitting of the joint around the cable results from an elastic deformation thereof during the closing of the mould, prior to the actual moulding operation.

15. Process according to any one of Claims 5 to 14, characterised in that, the moulding is an injection moulding.

16. Process according to any one of Claims 1 to 14, characterised in that the carrier and carried elements are provided with means of holding a helical spring, while, in a third phase, the said helical spring is inserted between the carrier and carried elements.

17. Process according to any one of Claims 7 to 16, characterised in that, to position the cable inside the mould, use is made of positioning studs for the zone in which the cable is to be positioned in the mould.

18. Process according to Claim 17, characterised in that the studs have a groove able to receive the cable.

19. Process according to Claim 18, characterised in that the studs are associated with retraction means permitting their accommodation in a first portion of the mould, when the latter is closed, elastic return means being associated with these retraction means, so that the studs automatically resume a position able to receive and hold a cable, when the mould is open.

20. Process according to any one of Claims 4 to 19, characterised in that the pre-anchoring devices 26a, 26b are in the form of a stirrup.

21. Process according to any one of Claims 4 to 19, characterised in that the pre-anchoring means consist of holding parts 92, 92' comprising hooks 94 directly moulded on the ends of the cable strands.

22. Process according to any one of Claims 11, 15 to 21, characterised in that a cylindrical surface 91, 95 is used as a sealing joint, directly moulded on the cable and made of a material exhibiting a lower hardness than the material used to make the mould, while, at the junction between the passages for the cable and the cavities for the parts to be moulded, the mould has a sharp edge similar in shape to that of the directrix of the cylindrical surface of the said surfaces (91, 95), but with substantially smaller dimensions.

23. Antivibration/antishock device of the type comprising a carrier element (11) and a carried element (12) linked by cable (13a, 13b), the carrier and carried elements each having at least two anchoring points for the cable, disposed in the vicinity of the apexes of a polygon with n apexes, the cable being alternately anchored to a point (140a, 140b) of the carrier element (11) and to a point (141, 141') of the carried element (12) and being oriented on the anchoring points (140a, 140b) of at least a first (11) of the said elements in a direction transverse overall to the radial direction (23a, 23b), characterised in that there is used as the carrier or carried element a modular element (11) including on the one hand individual anchoring modules (11a, 11b) and, on the other hand, assembly means (15, 17, 21) for these.

24. Device according to Claim 23, characterised in that it has a helical spring (35) arranged between the carrier and carried elements.

25. Device according to Claim 24, characterised in that the carrier (11) and carried elements (12) have means (24, 25, 33) for holding the helical spring (35).
